(19) Europäisches Patentamt

European Patent Office

Office européen des brevets

(11) **EP 1 072 186 A2**

(12) **EUROPÄISCHE PATENTANMELDUNG**

(43) Veröffentlichungstag:
**31.01.2001 Patentblatt 2001/05**

(51) Int. Cl.⁷: **A01G 31/00**

(21) Anmeldenummer: **00112993.1**

(22) Anmeldetag: **21.06.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.07.1999 DE 19935712**

(71) Anmelder:
**Christian Heinrich Sandler GmbH & Co. KG
95126 Schwarzenbach a d Saale (DE)**

(72) Erfinder: **Die Erfinder haben auf ihre Nennung verzichtet**

(54) **Pflanzsubstrat**

(57) Es wird ein Pflanzsubstrat aus einem thermisch verfestigten Vlies aus überwiegend synthetischen Fasern beschrieben, welches ein optimales Verhältnis von Luftvolumen zu Wasservolumen aufweist.

**EP 1 072 186 A2**

**Beschreibung**

Die vorliegende Erfindung betrifft ein Pflanzsubstrat für den erdlosen Pflanzenbau, wie es insbesondere bei Gewächshauskulturen aber auch in Freilandkulturen z.B. als Hydroponikträger oder als Anzuchtkörper in steigendem Maße eingesetzt wird. Ein Pflanzsubstrat der gattungsgemäßen Art wird im deutschen Gebrauchsmuster DE 297 12 629 beschrieben. Hierbei handelt es sich um ein Pflanzsubstrat, bestehend aus einem Vlies, das hauptsächlich synthetische Textilfasern enthält und ein Raumgewicht von 6 bis 60 kg/m$^3$ und eine Dicke von 15 bis 250 mm besitzt. Das Vlies besteht überwiegend aus synthetischen Fasern mit einer Faserstärke von 1,7 bis 100 dtex und Bindefasern, mit einer Faserstärke von 1,7 bis 30 dtex. Weiterhin können dem Vlies oberflächenaktive, z.B. benetzende Substanzen beigegeben sein.

Die vorliegende Erfindung bezieht sich auf ein derartiges Vlies, welches in den physikalischen Eigenschaften wie z.B. dem Verhältnis von Luft- und Wasseranteilen im Vlies sowie im Wasserspeichervermögen bei unterschiedlich angelegten Unterdrücken optimiert wurde.

Pflanzsubstrate bestehen aus Feststoffen, wie zum Beispiel Erde, Torf, Fasern, Partikeln oder Schaumstoffen. Zwischen diesen Feststoffen befinden sich Poren, welche im Falle des trockenen Substrates aus Luft bestehen. Diese Poren haben einerseits die Aufgabe, das mit Nährstoffen angereicherte Wasser (nachfolgend lediglich als Wasser bezeichnet) zu speichern und es der Pflanze verfügbar zu halten und andererseits eine Lockerung des Substrates zu gewährleisten um die in der Luft enthaltenen Gase wie Sauerstoff an die Wurzeln gelangen zu lassen und gegebenenfalls Kohlensäuregas abzuführen.

Um ein optimales Pflanzenwachstum zu erreichen ist ein guter Wasservorrat im Pflanzsubstrat vorteilhaft. Je größer dieser Wasservorrat ist, desto besser können Unregelmäßigkeiten in der Wasserversorgung ausgeglichen werden. Jedoch kann ein Nachteil eines hohen Wasservorrates sein, daß der Wasser- und/oder der Nährstoffvorrat weniger gut steuerbar sind, da sich beispielsweise durch die Verdunstung die Nährstoffkonzentration erhöht. Ein weiterer Nachteil ist, daß die Luftversorgung der Wurzeln schlechter wird.

Ein zu geringer Wasservorrat des Pflanzsubstrates bewirkt dagegen eine ungenügende Wasserversorgung und erhöht damit die Gefahr, daß die Pflanze austrocknet und verdorrt.

Neben genügend Nährlösung benötigen die Wurzeln für das Wachstum aber auch Luft, insbesondere den darin enthaltenen Sauerstoff. Durch ein ausreichendes Luftvolumen wird im Substrat Staunässe im unteren Bereich vermieden, was beispielsweise bei der Anstaubewässerung notwendig ist. In der gärtnerischen Praxis wird deshalb angestrebt, Substrate zu verwenden, die eine hohe Wasserdurchlässigkeit, d.h. ein hohes Luftvolumen aufweisen. Im Erwerbsgartenbau werden Substrate gewünscht, in denen nach Wassersättigung (Flutung) Luftmangel nur kurzfristig auftritt.

Bei ungenügender Durchlüftung des Substrates können zudem beispielsweise aufgrund von Staunässe ein Mikrobenbefall der Wurzel oder andere Wurzelkrankheiten auftreten.

Das Gesamtvolumen der Poren innerhalb des Pflanzsubstrates wird als Porenvolumen bezeichnet und ist eine wichtige kennzeichnende Größe des Pflanzsubstrates.

Das Porenvolumen wird aus dem Gesamtvolumen des Pflanzsubstrates errechnet, und ist die Differenz aus Gesamtvolumen und Feststoffvolumen.

$$V_p = V_{ges} - V_F \qquad (a)$$

wobei

$V_p$ = Porenvolumen
$V_{ges}$ = Gesamtvolumen des Pflanzsubstrates
$V_F$ = Feststoffvolumen

Beim trockenen Pflanzsubstrat sind die Poren vollständig mit Luft gefüllt. Beim befeuchteten Substrat ist die sich in den Poren befindliche Luft zum Teil durch das Wasser verdrängt, das Porenvolumen setzt sich dann aus den beiden Teilvolumina Luftvolumen und Wasservolumen zusammen, also

$$V_p = V_{Luft} + V_{Wasser} \qquad (b)$$

Für das Gesamtvolumen des Pflanzsubstrates ergibt sich folglich

$$V_{ges} = V_F + V_{Luft} + V_{Wasser}. \qquad (c)$$

Nach den Zusammenhängen (a), (b) und (c) kann man also festsetzen, daß $V_{ges}$ 100 % entspricht, und $V_F$, $V_{Luft}$ und $V_{Wasser}$ anteilig an $V_{Ges}$ beteiligt sind.

Bei Pflanzsubstraten ist das Verhältnis von Wasser- und Luftvolumen wichtig und ein entscheidendes Qualitätskriterium für das Pflanzsubstrat. (siehe hierzu: No. 103, Serie: Informatiereeks, Maart 1993, „Wortelmedia", Proefstation voor Tuinbow onder Glas, NL-2670 AA Naaldwijk).

Es hat sich in Versuchen gezeigt, daß die bisher bekannten Pflanzsubstrate nach dem DE-GM 297 12 629 eine gute Pflanzenentwicklung ermöglichten, was insbesondere auf ein hohes Luftvolumen und einem guten Gasaustausch im Wurzelbereich zurückgeführt wird. Probleme konnten insbesondere dann entstehen, wenn bei kurzzeitig ausgefallener Wasserzufuhr das Substrat der Pflanze kein Wasser aus einem zwischengespeicherten Vorrat zu Verfügung stellen konnte, da das Wasserspeichervermögen zu gering war. Ein Welken und Eingehen der Pflanze war die Folge.

Aufgabe der vorliegenden Erfindung ist es daher ein Pflanzsubstrat nach dem Stand der Technik bestehend aus einem thermisch verfestigten Vlies, das hauptsächlich synthetische Textilfasern enthält, mit einer Dicke von 10 — 250 mm, mit einem Gesamtvolumen von 100 % und einem Feststoffanteil von weniger als 5 Volumen %, derart zu verbessern, daß die aufgeführten Nachteile nicht mehr auftreten.

Die Aufgabe wird gemäß den Merkmalen des Anspruches 1 gelöst. Vorteilhafte Ausgestaltungen der Erfindung werden in den Unteransprüchen beschrieben.

Im Rahmen von Forschungsarbeiten wurde gefunden, daß ein optimiertes Pflanzsubstrat auf Basis einer besonderen Ausführungsform eines Pflanzsubstrates nach dem Stand der Technik hergestellt werden kann, welches ein optimales Verhältnis zwischen Luftvolumen und Wasservolumen aufweist.

Erreicht wird dies dadurch, daß dem thermisch verfestigten Vlies nach dem Stand der Technik ein Anteil von mindestens 5 % gekräuselter synthetischer Feinstfasern mit einem Fasertiter von höchstens 1,7 dtex und von mindestens 20 % gekräuselten Polyesterfasern mit einem Fasertiter von gleich oder mehr als 6,7 dtex, bezogen auf den Gesamtanteil an synthetischen Fasern von 100 %, enthält.

Ohne an irgendeine Theorie gebunden zu sein, wird davon ausgegangen, daß sich durch die Beimischung der gekräuselten synthetischen Feinstfasern die Kapillarkräfte innerhalb des Pflanzsubstrates derart verändern, daß ein besseres Wasserspeichervermögen resultiert.

Die Beimischung der synthetischen Feinstfasern kann allerdings den Nachteil haben, daß die mechanische Belastbarkeit des Pflanzsubstrates reduziert werden kann. Dieser Nachteil wird erfindungsgemäß durch den Zusatz einer stabilitätserhöhenden Komponente in Form einer relativ groben Polyesterfaser ausgeglichen.

In einer bevorzugten Ausführungsform enthält das Pflanzsubstrat einen Anteil von mindestens 10 % gekräuselter synthetischer Feinstfasern mit einem Fasertiter von gleich oder weniger als 1,2 dtex und von mindestens 20 % gekräuselten Polyesterfasern mit einem Fasertiter von gleich oder mehr als 11 dtex, bezogen auf den Gesamtanteil an synthetischen Fasern von 100 %. Bei diesem Pflanzsubstrat ist das Verhältnis zwischen Luftvolumen und Wasservolumen nochmals wesentlich gegenüber aus dem Stand der Technik bekannten Materialien verbessert, wobei eine gute Stabilität des Pflanzsubstrates erreicht wird.

In der am meisten bevorzugten Ausführungsform enthält das Pflanzsubstrat einen Anteil von mindestens 10 % gekräuselter synthetischer Feinstfasern mit einem Fasertiter von höchstens 0,7dtex und von mindestens 20 % gekräuselten Polyesterfasern mit einem Fasertiter von 28 dtex, bezogen auf den Gesamtanteil an synthetischen Fasern von 100 %. Ein derartiges Pflanzsubstrat zeigt eine weitere Verbesserung des Wasser-Luft-Verhältnisses in Verbindung mit einer guten Stabilität des Pflanzsubstrates. Hierbei sind die Kapillarkräfte aufgrund der Feinstfaser mit einer Stärke von 0,7 dtex am höchsten ausgebildet.

Erläuterung der Zeichnungen

Figur 1 zeigt schematisch eine Skizze des Aufbaus des pF-Behälters zur Messung des Wasserspeichervermögens bei verschiedenen Druckhöhen.

Figur 2 zeigt als Beispiel ein Diagramm über das Wasserspeichervermögen des erfindungsgemäßen Pflanzsubstrates bei unterschiedlichen Drücken

Figur 3 zeigt als Beispiel ein Diagramm über das Wasserspeichervermögen des eines nicht optimierten Pflanzsubstrates bei unterschiedlichen Drücken

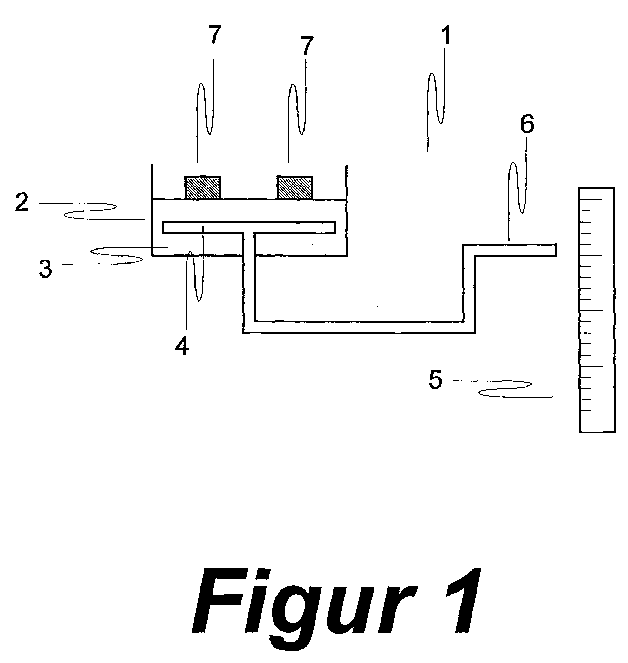

Die Messung des Wasserspeichervermögens wird nach dem in No. 103, Serie: Informatiereeks, Maart 1993, „Wortelmedia", Proefstation voor Tuinbow onder Glas, NL-2670 AA Naaldwijk im Kapitel 4.4.1. beschriebenen Verfahren (Verfahren mit der internen Kennung α) mit dem sogenannten pF-Behälter **1** durchgeführt, wie er in der Figur 1 schematisch dargestellt ist. Dieser Behälter besteht aus einem Trog **2** welcher mit Bauxit-Sand **3** gefüllt ist. In das Sandbett ist ein Drainagerohr **4** eingebracht, welches mit einer Wassersäule **6** verbunden ist. Die mit einer Längeneinteilung versehene Skala **5**, deren Nullpunkt auf gleicher Höhe mit der Hälfte der Probenmitte liegt gibt in cm die angelegte Druckhöhe an. Die Proben **7** werden zu Beginn der Prüfung mit Wasser gesättigt und verwogen. Je nachdem, ob es sich um lose oder um mattenförmige gebundene Substrate handelt werden die Proben unterschiedlich aufbereitet. Während lose Substrat in Ringe gepreßt werden, werden mattenförmige gebundene Substrate als Blöcke geprüft.

Ein beispielsweise bei einem hohen Unterdruck ermitteltes hohes Wasservolumen steht demnach für ein gutes Wasserspeichervermögen des Pflanzsubstrates, während ein bei niederem Unterdruck ermitteltes niederes Wasservolumen für ein schlechtes Wasserspeichervermögen des Pflanzsubstrates steht.

Man geht davon aus, daß bei einer Druckhöhe von -10 cm Wassersäule ein Luftvolumen von 15 % bis 60 % und bei einer Druckhöhe von -50 cm Wassersäule ein Luftvolumen von 65 % bis 85 % ein Optimum an Luftvolumen für das Wurzelwachstum darstellt, wobei dann die Differenz zwischen dem Gesamtvolumen und dem Volumen des Feststoffes, das Wasservolumen ergibt. Bei einem Volumen des Feststoftes von beispielsweise 5 % ergibt sich hieraus in etwa ein Wasservolumen von 35 — 80 % bei einer Druckhöhe von -10 cm Wassersäule und ein Wasservolumen 10 — 30 % bei einer Druckhöhe von -50 cm Wassersäule. Bei einem niedrigeren Feststoffvolumen erhöhen sich diese Werte jeweils geringfügig um den Betrag aus der Differenz von 5 % und dem tatsächlichen Feststoffvolumens in %.

Die nach dem Verfahren mit der Kennung $\alpha$ ermittelten Meßwerte werden zu einem Diagramm zur Darstellung der Speichercharakteristik zusammengefaßt.

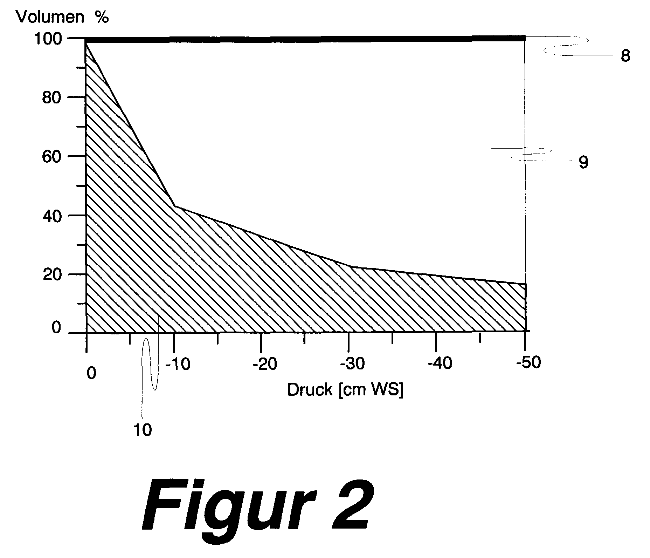

Anhand der Figur 2 wird folgend die Darstellung der Speichercharakteristik näher erläutert.

Die Darstellung der Speichercharakteristik erfolgt mit Hilfe eines Koordinatensystems, in dessen Abszisse den Druck in cm Wassersäule (WS) und in dessen Ordinate das Volumen in % eingetragen ist, wobei 100 % Volumen das Gesamtvolumens $V_{Ges}$ des Pflanzsubstrates ausmachen.

Nach der eingangs erläuterten Formel (c) setzt sich $V_{ges}$ aus der Summe des Feststoffvolumens **8** $V_F$ , des Luftvolumens **9** $V_{Luft}$ und des Wasservolumens **10** $V_{Wasser}$ zusammen.

Da der Prüfling **7** bei einem Druck von 0 cm WS mit Wasser gesättigt ist, entspricht der Wert des Wasservolumens dem des Porenvolumens.

Während $V_F$ **8** bei unterschiedlichen Drücken konstant bleibt, können $V_{Luft}$ **9** und $V_{Wasser}$ **10** abhängig von der Speichercharakteristik des Pflanzsubstrates variieren.

Aus der Darstellung wird deutlich, ob ein Pflanzsubstrat einen großes Wasservolumen **10** zuungunsten des Luftvolumens **9** speichern kann, oder ein großes Luftvolumen **9** zuungunsten des Wasservolumens **10** . Darüberhinaus ergibt sich eine Aussage darüber, wie stark das Wasser im Pflanzsubstrat gebunden wird, nämlich durch den Wert, welcher sich bei den unterschiedlichen Drücken aus den Kurven ergibt. So bedeutet ein hohes Wasservolumen **10** bei einem hohen Druck ein gutes Wasserspeichervermögen, und ein niedriger Druck ein geringes Wasserspeichervermögen.

(Da es sich bei den in der Ordinate angegebenen Drücken um Unterdrücke handelt, sind diese mit einem negativen Vorzeichen versehen. Wenn in dieser Beschreibung von einem hohen Druck die Rede ist, ist in jedem Fall ein hoher Unterdruck gemeint).

Die folgenden Beispiele 1 — 3 befassen sich mit dem erfindungsgemäßen Pflanzsubstrat:

Beispiel 1

Faserzusammensetzung des Pflanzsubstrates:

     15 Gew.-% synthetische Feinstfaser aus Polyester, gekräuselt 0,7 dtex
     35 Gew.-% Polyesterfaser gekräuselt 28 dtex
     50 Gew.-% Polyester-Bindefaser des Mantel-Kern-Types 4,4 dtex

Dicke:          50 mm
Feststoffanteil:     2 Volumen %

Ergebnis der Prüfung des Wasserspeichervermögens nach der unter der Kennung $\alpha$ in der Beschreibung hinterlegten Methode:

Wasservolumen bei —10 cm Wassersäule41,5 %
Wasservolumen bei —50 cm Wassersäule17 %

Das Ergebnis wurde in der Figur 2 graphisch dargestellt.

Beispiel 2

Faserzusammensetzung des Pflanzsubstrates:

     30 Gew.-% synthetische Feinstfaser aus Polyester, gekräuselt 0,7 dtex
     25 Gew.-% Polyesterfaser gekräuselt 28 dtex
     45 Gew.-% Polyester-Bindefaser des Mantel-Kern-Types 4,4 dtex

Dicke:          50 mm
Feststoffanteil:     2 Volumen %

Ergebnis der Prüfung des Wasserspeichervermögens nach der unter der Kennung $\alpha$ in der Beschreibung hinterlegten Methode:

Wasservolumen bei —10 cm Wassersäule46,5 %
Wasservolumen bei —50 cm Wassersäule27 %

Beispiel 3

Faserzusammensetzung des Pflanzsubstrates:

     25 Gew.-% synthetische Feinstfaser aus Polyester, gekräuselt 1,2 dtex
     30 Gew.-% Polyesterfaser gekräuselt 17 dtex
     45 Gew.-% Polyester-Bindefaser des Mantel-Kern-Types 4,4 dtex

Dicke:          50 mm
Feststoffanteil:     2 Volumen %

Ergebnis der Prüfung des Wasserspeichervermögens nach der unter der Kennung $\alpha$ in der Beschreibung hinterlegten Methode:

Wasservolumen bei —10 cm Wassersäule42,5 %
Wasservolumen bei —50 cm Wassersäule16 %

Vergleichsbeispiel:

Pflanzsubstrat nach dem Stand der Technik:

Faserzusammensetzung des Pflanzsubstrates:

50 Gew.-% Polyesterfaser gekräuselt 3,3 dtex
50 Gew.-% Polyester-Bindefaser des Mantel-Kern-Types 4,4 dtex

Dicke: 50 mm
Feststoffanteil: 2 Volumen %

Ergebnis der Prüfung des Wasserspeichervermögens nach der unter der Kennung α in der Beschreibung hinterlegten Methode:

Wasservolumen bei —10 cm Wassersäule20 %
Wasservolumen bei —50 cm Wassersäule3 %

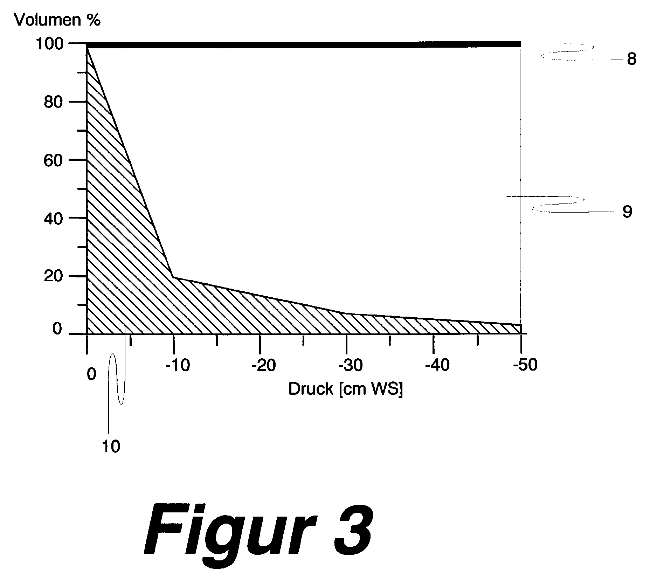

Das Ergebnis wurde in der Figur 3 graphisch dargestellt
Die Figur 1 zeigt das Ergebnis des Beispieles 1, wobei ein ausgewogenes Vehältnis von Wasser- und Luftvolumen vorliegt, wie es dem Idealzustand sehr nahe kommt. Auch das Wasserspeichervermögen ist mit einem Wert von 41,5 % bei einer Druckhöhe von —10 cm Wassersäule und von 17 % bei einer Druckhöhe von — 50 cm Wassersäule im idealen Bereich.
Die Beispiele 2 und 3, auf deren graphische Darstellung verzichtet wurde, zeigen die Beeinflussung des Wasservolumens durch den Anteil und die Stärke der synthetischen Feinstfasern.
Im Falle des Beispieles 2 wurde der Anteil der synthetischen Feinstfasern von 0,7 dtex erhöht, was den Wert des Wasserspeichervermögens auf 46,5 % bei einer Druckhöhe von — 10 cm Wassersäule und auf 27 % bei einer Druckhöhe von — 50 cm Wassersäule erhöhte. Hier wurde offensichtlich aufgrund der größeren Menge an Feinstfasern die Kapillarwirkung vergrößert.
Im Falle des Beispieles 3 wurde der Fasertiter der synthetischen Feinstfasern auf 1,2 dtex erhöht und deren Anteil auf 25 % festgelegt , wobei sich ein Wert des Wasserspeichervermögens von 42,5 % bei einer Druckhöhe von — 10 cm Wassersäule und von 16 % bei einer Druckhöhe von — 50 cm Wassersäule einstellte. Hier zeigte sich offensichtlich, daß der größere Fasertiter der Feinstfasern und der geringere Anteil im Vergleich zum Beispiel 2 die Kapillarwirkung wieder etwas verringert.
Die Figur 3 zeigt das Ergebnis des Vergleichsbeispieles in graphischer Darstellung. Es zeigt sich ein geringes Wasservolumen, bei erhöhtem Luftvolumen. Hierbei besteht die Gefahr des Austrocknens der Pflanzen, insbesondere beispielsweise bei Schwankungen in der Wasserzufuhr. Das Wasserspeichervermögen ist mit einem Wert von 3 % bei einer Druckhöhe von — 50 cm Wassersäule zu gering.

**Patentansprüche**

1. Pflanzsubstrat bestehend aus einem thermisch verfestigten Vlies, das hauptsächlich synthetische Textilfasern enthält, mit einer Dicke von 10 — 250 mm, mit einem Gesamtvolumen von 100 % und einem Feststoffvolumen von weniger als 5 %,
dadurch gekennzeichnet,
daß das Vlies eine Mischung aus mindestens 5 Gew. % gekräuselter synthetischer Feinstfasern mit einem Fasertiter von höchstens 1,7 dtex und aus mindestens 20 Gew. % gekräuselter synthetischer Polyesterfasern mit einem Fasertiter von gleich oder mehr als 6,7 dtex bezogen auf Gesamtanteil von synthetischen Fasern enthält.

2. Pflanzsubstrat nach Anspruch 1
dadurch gekennzeichnet,
daß das Vlies eine Mischung aus mindestens 10 Gew % gekräuselter synthetischer Feinstfasern mit einem Fasertiter höchstens 1,2 dtex und aus mindestens 20 Gew % gekräuselter synthetischer Polyesterfasern mit einem Fasertiter von gleich oder mehr als 11,0 dtex bezogen auf Gesamtanteil von synthetischen Fasern, sowie aus Bindefasern enthält.

3. Pflanzsubstrat nach Anspruch 1
dadurch gekennzeichnet,
daß das Vlies eine Mischung aus mindestens 10 Gew % gekräuselter synthetischer Feinstfasern mit einem Fasertiter von höchstens 0,7 dtex und aus mindestens 20 Gew % gekräuselter synthetischer Polyesterfasern mit einem Fasertiter von 28 dtex bezogen auf Gesamtanteil von synthetischen Fasern, sowie aus Bindefasern enthält.

4. Pflanzsubstrat bestehend aus einem thermisch verfestigten Vlies, das hauptsächlich synthetische Textilfasern enthält, mit einer Dicke von 10 — 250 mm, mit einem Gesamtvolumen von 100 % und einem Feststoffvolumen von weniger als 5 %, und einem Porenvolumen, welches aus der Differenz von Gesamtvolumen und Feststoffvolumen gebildet ist und besagtes Porenvolumen aus der Summe von Luftvolumen und Wasservolumen gebildet ist und wobei das Wasservolumen bei einem Unterdruck von 0 cm Wassersäule (WS), dem Wert des Porenvolumens entspricht
dadurch gekennzeichnet,
daß das Wasservolumen bei einem Druck von -10 cm WS 35 % bis 80 % beträgt.

5. Pflanzsubstrat nach Anspruch 4
dadurch gekennzeichnet,
daß das Wasservolumen bei einem Druck von -50 cm WS 10 % bis 30 % beträgt

# *Figur 1*

*Figur 2*

**Figur 3**